# DEMANDE DE BREVET EUROPEEN

(11) **EP 0 884 086 A2**
(43) Date de publication de la demande: **16.12.1998**
(21) Numéro de dépôt: 98401363.1
(22) Date de dépôt: 08.06.1998
(51) Int. Cl.: B01D 53/047

(54) **Procédé et installation de séparation d'air par adsorption à variation de pression**

(30) Priorité: 12.06.1997 FR 9707293
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Monereau, Christian, 75011 - Paris (FR)
(74) Mandataire: Le Moenner, Gabriel

(57) **Abrégé**

Suivant ce procédé, on établit les circulations gazeuses dans l'adsorbeur (1) en faisant passer les flux gazeux sensiblement radialement à travers un lit annulaire (2) qui contient un volume (V) d'adsorbant au moins égal à 1 m³ et dont la hauteur (H), mesurée en mètres, est au moins égale à 0,8 x V^{0,35}.

Application à la production d'oxygène à partir d'air atmosphérique.

## Description

La présente invention est relative à un procédé de séparation d'air par adsorption modulée en pression dans une installation comportant au moins un adsorbeur.

Par l'expression "adsorption modulée en pression", ou encore PSA (Pressure Swing Adsorption), on entend les différents cycles qui ont été proposés pour produire de l'oxygène à partir d'air atmosphérique par adsorption sélective sensiblement isotherme, avec la pression de l'adsorbeur ou de chaque adsorbeur variant entre une haute pression et une basse pression. La haute pression du cycle peut être supérieure ou égale à la pression atmosphérique, tandis que la basse pression du cycle peut être égale ou inférieure à la pression atmosphérique. Ces procédés comportent différentes combinaisons d'étapes d'adsorption, de décompression/régénération et de recompression du ou des adsorbeurs.

Des phénomènes thermiques complexes interviennent au sein de l'adsorbant dans les procédés PSA. Ils sont dus d'une part aux chaleurs d'adsorption et de désorption des constituants adsorbés, d'autre part aux échanges de chaleur entre les fluides en circulation et l'adsorbant. On a constaté (voir par exemple le document US-A-5 529 610) que, par suite de ces phénomènes, des gradients thermiques tendent à se former au sein du lit d'adsorbant.

Or, un adsorbant donné possède une efficacité variable avec la température. Par conséquent, les gradients thermiques ont un effet sur les performances des adsorbeurs. Diverses mesures ont été proposées soit pour réduire cet effet lorsqu'il est néfaste, soit pour en tirer parti, comme par exemple par une augmentation des transferts thermiques au sein de l'adsorbant au moyen de barres métalliques (US-A- 4 026 680), ou par l'utilisation de lits multiples adaptant plusieurs types d'adsorbants aux zones de température.

On comprend que les gradients thermiques sont particulièrement importants dans le cas de la production d'oxygène à partir d'air, où la majeure partie du débit entrant est adsorbée puis désorbée, ce qui met en jeu à chaque cycle des quantités de chaleur d'adsorption/désorption très importantes.

La Demanderesse a constaté que, de manière surprenante, il était possible d'augmenter substantiellement l'efficacité du procédé PSA de séparation d'air par une géométrie particulière du lit d'adsorbant.

Le procédé suivant l'invention est ainsi caractérisé en ce qu'on établit les circulations gazeuses dans l'adsorbeur en faisant passer les flux gazeux sensiblement radialement à travers un lit annulaire fixe qui contient un volume V d'adsorbant au moins égal à 1 m³ et dont la hauteur H, mesurée en mètres, est au moins égale à 0,8 x V^{0,35}, typiquement comprise entre 1 x V^{0,35} et 3 x ^{0,35}.

L'invention a également pour objet une installation de séparation d'air destinée à la mise en oeuvre d'un tel procédé.

Cette installation, du type comprenant une source d'air sous pression et au moins un adsorbeur pouvant être relié sélectivement à cette source, est caractérisée en ce que :
- le volume V d'adsorbant est au moins égal à 1 m³;
- l'adsorbeur contient un lit annulaire fixe d'adsorbant; et
- la hauteur H du lit annulaire, mesurée en mètre, est au moins égale à 0,8 x V^{0,35}.

Typiquement H ≥ 1 x V^{0,35} et n'excède pas 3 x V^{0,35}.

Dans un mode de réalisation, le lit annulaire est porté par un fond muni d'une isolation thermique.

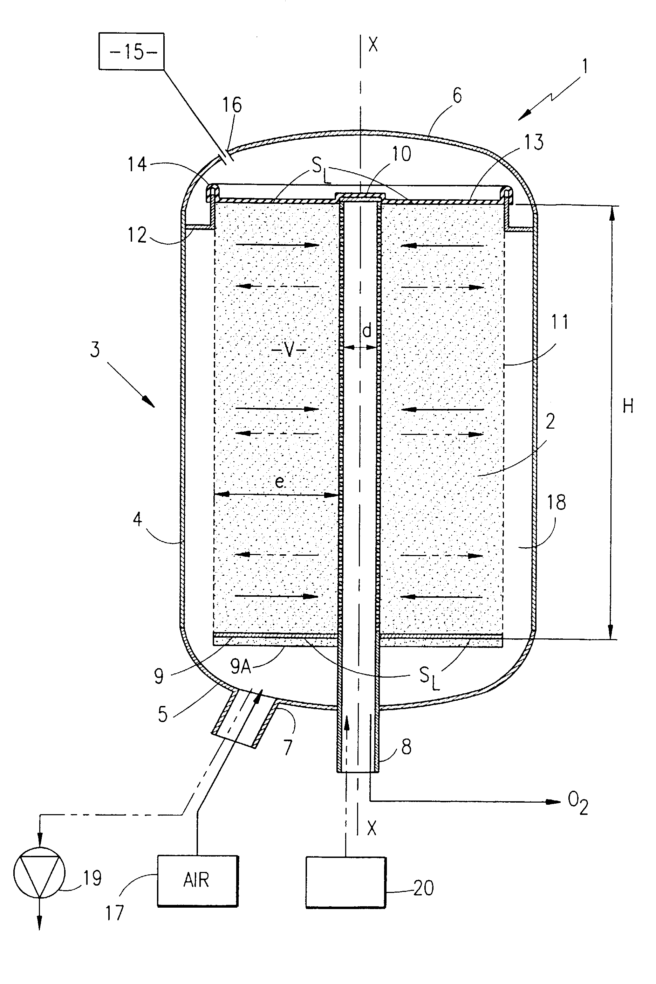

Un exemple de mise en oeuvre de l'invention va maintenant être décrit en regard du dessin annexé, dont la Figure unique représente schématiquement une installation conforme à l'invention.

On a schématisé sur le dessin un adsorbeur 1 qui contient un lit annulaire 2 d'un adsorbant adapté pour séparer l'azote de l'oxygène par un procédé PSA de traitement d'air atmosphérique. L'adsorbant 2 peut être tout type de matériau particulaire connu dans la technique, par exemple un tamis moléculaire 5A.

L'adsorbeur 1 comporte une enveloppe extérieure 3 d'axe vertical X-X, constituée d'une virole cylindrique 4, d'un dôme inférieur bombé 5 et d'un dôme supérieur bombé 6. Le dôme 5 est équipé d'une tubulure latérale extérieure 7 et est traversé à joint étanche par un tube central 8 de diamètre d.

Un fond inférieur 9 rigide, en forme de disque annulaire, est soudé autour du tube 8, à une petite distance au-dessus du dôme 5. La partie du tube 8 située sous le fond 9 est non perforée, tandis que sa partie située au-dessus de ce fond est perforée. Une plaque supérieure 10 obture l'extrémité supérieure du tube 8. Une grille annulaire 11 entoure coaxialement la partie perforée du tube 8 et est soudée par sa base à la périphérie du fond 9. Le sommet de la grille est soudé à une cornière annulaire 12 elle-même soudée à l'extrémité supérieure de la virole 4.

L'adsorbant 2 emplit tout l'espace délimité entre le tube 8 et la grille 11. Une membrane souple 13, dont le bord déroulant 14 est collé de façon étanche à la cornière 12, s'applique élastiquement par sa région centrale sur la plaque 10 et par sa région annulaire intermédiaire sur pratiquement toute la surface supérieure de l'adsorbeur. Pour assurer une bonne application permanente de la membrane sur l'adsorbant, une pression supérieure à la pression maximale du cycle d'adsorption est maintenue dans le dôme 6, grâce à une source de gaz 15 qui est reliée à un orifice 16 du dôme.

L'adsorbeur contient ainsi un lit annulaire d'adsorbant dont le volume V est au moins égal à 1 m³, dont la hauteur H est égale à la distance séparant le fond 9 de la membrane 13, et dont l'épaisseur radiale e est égale à la distance entre le tube 8 et la grille 11.

En service, l'adsorbeur subit un cycle qui comprend : une phase d'adsorption, dans lequel la tubulure 7 est reliée à une source 17 d'air sous la haute pression du cycle, qui est au moins égale à la pression atmosphérique; une phase de régénération de l'adsorbant, comportant au moins une étape de décompression jusqu'à la basse pression du cycle; et une phase de recompression jusqu'à la haute pression. Ce cycle peut être l'un quelconque des nombreux cycles qui ont été proposés.

Pendant la phase d'adsorption, l'air à traiter pénètre dans l'espace annulaire 18 qui sépare la grille 11 de la virole 4 de l'enveloppe 3, et traverse sensiblement radialement le lit 2 vers l'intérieur (flèches en traits pleins), tandis que l'azote est adsorbé. L'oxygène produit se rassemble dans le tube 8 et sort de l'adsorbeur par l'extrémité inférieure de celui-ci.

Au cours de la phase de régénération, la tubulure 7 peut être mise à l'atmosphère ou reliée à une pompe à vide 14, et le tube 8 peut être obturé ou relié à une source 20 de gaz d'élution, par exemple d'oxygène de production ou d'oxygène impur obtenu lors d'une phase de dépressurisation de l'adsorbeur. Il se produit dans tous les cas une circulation de gaz sensiblement radiale en sens inverse de la précédente, c'est-à-dire traversant le lit 2 dans le sens centrifuge (flèches en traits mixtes) et sortant de l'adsorbeur via le tube 8.

La géométrie du lit 2 est telle que H ≥ 0,8 x V^{0,35}, avec avantageusement H ≥ V^{0,35} et H ≤ 3 x V^{0,35} et de préférence H compris entre 1,0 x V^{0,35} et 2,5 x V^{0,35}.

On a constaté de façon surprenante que, pour un lit d'épaisseur radiale e donnée, les performances augmentaient lorsqu'on passait d'une unité pilote de faible hauteur à une unité de taille industrielle de grande hauteur, alors que rien dans la théorie ne laissait prévoir ce résultat et qu'au contraire la distribution des flux gazeux est moins avantageuse dans le cas de l'unité industrielle.

On attribue ce résultat au fait que les entrées de chaleur latérales par les surfaces S_{L} parallèles aux écoulements gazeux, qui modifient la température de la zone d'adsorbant adjacente, sont proportionnellement alors beaucoup plus faibles.

Ainsi, la moindre importance relative des gradients thermiques orthogonalement aux écoulements gazeux conduirait à un travail plus homogène de l'adsorbant sur toute la section perpendiculaire aux flux gazeux et, de ce fait, à de meilleures performances globales.

On a constaté par ailleurs que, de façon surprenante, avec un adsorbeur suivant l'invention, l'énergie spécifique de séparation de l'oxygène est substantiellement inférieure à ce qu'elle serait si le même volume V du même adsorbant était disposé sous la forme d'un lit cylindrique classique de hauteur e, avec une circulation verticale des courants gazeux à travers ce lit.

On pense que, là encore, ce résultat avantageux provient du fait que la forme élancée de l'adsorbeur correspond à des surfaces parallèles aux écoulements gazeux S_{L}, supérieure et inférieure, particulièrement faibles, et inférieures à ce qu'elles sont dans le cas de l'adsorbeur à lit cylindrique classique, ce qui réduit les gradients thermiques dans le sens perpendiculaire aux écoulements gazeux, c'est-à-dire parallèlement à l'axe X-X.

Eventuellement, on peut prévoir une isolation thermique du fond 9, comme schématisé en 9A, afin de réduire encore les gradients thermiques verticaux au sein de l'adsorbant.

En variante, le lit 2 peut être constitué d'au moins deux lits annulaires concentriques élémentaires dont chacun est formé d'un adsorbant différent.

## Revendications

1. Procédé de séparation d'air par adsorption modulée en pression dans une installation comportant au moins un adsorbeur, caractérisé en ce qu'on établit les circulations gazeuses dans l'adsorbeur (1) en faisant passer les flux gazeux sensiblement radialement à travers un lit annulaire fixe (2) qui contient un volume V d'adsorbant au moins égal à 1 m³ et dont la hauteur H, mesurée en mètres, est au moins égale à 0,8 x V^{0,35}.

2. Procédé suivant la revendication 1, caractérisé en ce que ladite hauteur (H) est au moins égale à V^{0,35}.

3. Procédé suivant la revendication 2, caractérisé en ce que ladite hauteur (H) n'excède pas 3 x V^{0,35}.

4. Installation de séparation d'air par adsorption modulée en pression, du type comprenant une source d'air sous pression (12) et au moins un adsorbeur (1) pouvant être relié sélectivement à cette source, caractérisée en ce que :
- le volume V d'adsorbant est au moins égal à 1 m³ ;
- l'adsorbeur (3) contient un lit annulaire fixe d'adsorbant (2); et
- la hauteur H du lit annulaire, mesurée en mètre, est au moins égale à 0,8 x V^{0,35}.

5. Installation suivant la revendication 4, caractérisée en ce que ladite hauteur (H) est au moins égale à V^{0,35}.

6. Installation suivant la revendication 5, caractérisée en ce que ladite hauteur (H) n'excède pas 3 x V^{0,35}.

7. Installation suivant l'une quelconque des revendications 4 à 7, caractérisée en ce que le lit annulaire (2) est porté par un fond (9) muni d'une isolation thermique.

8. Installation suivant l'une quelconque des revendications 4 à 7, caractérisée en ce que ledit lit annulaire (2) comprend au moins deux lits annulaires concentriques élémentaires d'adsorbant.

9. Installation suivant la revendication 8, caractérisée en ce que lesdits lits annulaires sont constitués d'adsorbants différents.
